# EUROPÄISCHE PATENTANMELDUNG

(11) **EP 4 683 009 A1**
(43) Veröffentlichungstag der Anmeldung: **21.01.2026**
(21) Anmeldenummer: 25182350.6
(22) Anmeldetag: 12.06.2025
(51) Int. Cl.: H01M 8/04014, H01M 8/04007, H01M 8/04119, H01M 8/04223, H01M 8/04828, H01M 8/0662, H01M 8/1018, H01M 8/10, F28D 21/00

(54) **BRENNSTOFFZELLENABGASANLAGE, BRENNSTOFFZELLENSYSTEM UND VERFAHREN ZUM VERRINGERN DES WASSERGEHALTS IN BRENNSTOFFZELLENABGAS**

(30) Priorität: 05.07.2024 DE 102024119111
(71) Anmelder: Purem GmbH, 66539 Neunkirchen (DE)
(72) Erfinder: Wink, Peter, Uhingen (DE); Lehr, Tobias, Esslingen (DE); Birgler, Markus, Wernau (DE); Hammer, Jochen, Stuttgart (DE)
(74) Vertreter: Ruttensperger Lachnit Trossin Gomoll

(57) **Zusammenfassung**

Eine Brennstoffzellenabgasanlage (20) für ein Brennstoffzellensystem (10), insbesondere in einem Fahrzeug, umfasst eine Wärmetauscheranordnung (24) mit einem von Brennstoffzellenabgas (B) durchströmbaren ersten Wärmetauscherbereich (26) und einem von Kühlgas (L) durchströmbaren zweiten Wärmetauscherbereich (30), wobei der erste Wärmetauscherbereich (24) und der zweite Wärmetauscherbereich (30) zur Übertragung von Wärme von dem Brennstoffzellenabgas (B) auf das Kühlgas (L) in Wärmeübertragungswechselwirkung stehen, sowie eine Mischanordnung (46) zur Aufnahme von aus dem ersten Wärmetauscherbereich (36) abgegebenem, gekühltem Brennstoffzellenabgas (B) und aus dem zweiten Wärmetauscherbereich (30) abgegebenem, erwärmtem Kühlgas (L) in einem Mischvolumen (48) zur Erzeugung eines Gemisches (G) aus gekühltem Brennstoffzellenabgas (B) und erwärmtem Kühlgas (L) und zur Abgabe des Gemisches (G).

## Beschreibung

Die vorliegende Erfindung betrifft eine Brennstoffzellenabgasanlage, ein eine derartige Brennstoffzellenabgasanlage enthaltendes Brennstoffzellensystem und ein Verfahren zum Verringern des Wassergehalts in dem von einer Brennstoffzelle eines Brennstoffzellensystems abgegebenen Brennstoffzellenabgas.

Bei der Erzeugung elektrischer Energie in einem beispielsweise mit einer oder mehreren PEM-Brennstoffzellen aufgebauten Brennstoffzellensystem entsteht insbesondere im Kathodenbereich Wasser. Dieses wird im Allgemeinen als Wasserdampf in dem den Kathodenbereich verlassenden Kathodenabgas, welches im Wesentlichen das auch zur Umgebung abzugebende Brennstoffzellenabgas bereitstellt, mitgeführt und über eine Brennstoffzellenabgasanlage zur Umgebung abgegeben. Vor allem bei vergleichsweise niedriger Umgebungstemperatur entsteht bei der Abgabe von stark mit Wasserdampf angereichertem Brennstoffzellenabgas in die Umgebungsluft aufgrund der spontanen Absenkung der Temperatur des Brennstoffzellenabgases beim Kontakt mit der Umgebungstemperatur durch auskondensierendes Wasser Nebel. Dieser kann die Sicht im Umfeld eines mit einem derartigen Brennstoffzellensystem ausgestatteten Fahrzeugs beeinträchtigen und kann auch zur Eisbildung auf dem Boden im Bereich eines mit einem derartigen Brennstoffzellensystem ausgestatteten Fahrzeugs führen.

Es ist die Aufgabe der vorliegenden Erfindung, eine Brennstoffzellenabgasanlage, ein damit aufgebautes Brennstoffzellensystem sowie ein Verfahren zum Verringern des Wassergehalts in Brennstoffzellenabgas bereitzustellen, mit welchen bei baulich einfacher Ausgestaltung die Abgabe von zu einer starken Nebelbildung führendem Brennstoffzellenabgas in die Umgebung vermieden wird.

Gemäß einem ersten Aspekt der vorliegenden Erfindung wird diese Aufgabe gelöst durch ein Brennstoffzellenabgasanlage für ein Brennstoffzellensystem, insbesondere in einem Fahrzeug, umfassend:
- eine Wärmetauscheranordnung mit einem von Brennstoffzellenabgas durchströmbaren ersten Wärmetauscherbereich und einem von Kühlgas durchströmbaren zweiten Wärmetauscherbereich, wobei der erste Wärmetauscherbereich und der zweite Wärmetauscherbereich zur Übertragung von Wärme von dem Brennstoffzellenabgas auf das Kühlgas in Wärmeübertragungswechselwirkung stehen,
- eine Mischanordnung zur Aufnahme von aus dem ersten Wärmetauscherbereich abgegebenem, gekühltem Brennstoffzellenabgas und aus dem zweiten Wärmetauscherbereich abgegebenem, erwärmtem Kühlgas in einem Mischvolumen zur Erzeugung eines Gemisches aus gekühltem Brennstoffzellenabgas und erwärmtem Kühlgas und zur Abgabe des Gemisches.

In einer derart aufgebauten Brennstoffzellenabgasanlage wird durch das Kühlen des Brennstoffzellenabgases vermittels des Kühlgases und die dabei auftretende Erwärmung des Kühlgases sowie die nachfolgende Vermischung dieser beiden Gasströme dafür gesorgt, dass das so erzeugte und zur Umgebung abgegebene Gemisch aus Brennstoffzellenabgas und Kühlluft einen thermodynamischen Zustand aufweist, welcher auch bei dem nachfolgenden Kontakt mit vergleichsweise kalter Umgebungsluft nicht zu einer starken Kondensation von im Brennstoffzellenabgas noch enthaltendem Wasser und einer damit einhergehenden Nebelbildung führt.

Um in der erfindungsgemäßen Brennstoffzellenabgasanlage die verschiedenen Gasströme definiert leiten zu können, wird vorgeschlagen,
- dass der erste Wärmetauscherbereich einen ersten Wärmetauscher-Eintrittsbereich zur Aufnahme von Brennstoffzellenabgas und einen ersten Wärmetauscher-Austrittsbereich zur Abgabe von gekühltem Brennstoffzellenabgas umfasst,
- dass der zweite Wärmetauscherbereich einen zweiten Wärmetauscher-Eintrittsbereich zur Aufnahme von Kühlgas und einen zweiten Wärmetauscher-Austrittsbereich zur Abgabe von erwärmtem Kühlgas umfasst,
- dass die Mischanordnung einen ersten Mischanordnung-Eintrittsbereich zur Aufnahme von am ersten Wärmetauscher-Austrittsbereich abgegebenem, gekühltem Brennstoffzellenabgas und einen zweiten Mischanordnung-Eintrittsbereich zur Aufnahme von am zweiten Wärmetauscher-Austrittsbereich abgegebenem, erwärmtem Kühlgas umfasst.

Die Zufuhr des Kühlgases auch mit dem erforderlichen Massenstrom zu der Wärmetauscheranordnung kann beispielsweise dadurch gewährleistet werden, dass eine Kühlgas-Zuführanordnung zum Zuführen von Kühlgas zu dem zweiten Wärmetauscherbereich vorgesehen ist. Beispielsweise kann die Kühlgas-Zuführanordnung ein Gebläse oder einen Kompressor umfassen.

Um in einfacher Weise eine ausreichend große Menge des Kühlgases zur Verfügung stellen zu können, kann die Kühlgas-Zuführanordnung zum Zuführen von Umgebungsluft als Kühlgas zu dem zweiten Wärmetauscherbereich ausgebildet sein.

Um bei dem Prozess der Kühlung des Brennstoffzellenabgases und der damit einhergehenden Erwärmung des Kühlgases sowie der nachfolgenden Zusammenführung dieser Gasströme aus dem Brennstoffzellenabgas auskondensierendes Wasser abführen zu können, wird vorgeschlagen, dass eine Wasser-Abscheideanordnung zum Abscheiden von aus dem Brennstoffzellenabgas auskondensiertem Wasser vorgesehen ist.

Zum Zuführen von wasserentreichertem Brennstoffzellenabgas zu der Mischanordnung kann die Wasser-Abscheideanordnung im Strömungsweg des Brennstoffzellenabgases stromaufwärts des Mischvolumens vorgesehen sein.

Da die Kühlung des Brennstoffzellenabgases im Bereich der Wärmetauscheranordnung erfolgt, ist es besonders vorteilhaft, wenn die Wasser-Abscheideanordnung im Bereich des ersten Wärmetauscherbereichs vorgesehen ist.

Beispielsweise kann die Wasser-Abscheideanordnung in Zuordnung zu dem ersten Wärmetauscherbereich ein Wasser-Aufnahmevolumen und einen dritten Wärmetauscher-Austrittsbereich zur Abgabe von Wasser aus dem Wasser-Aufnahmevolumen umfassen.

Gemäß einem weiteren Aspekt der vorliegenden Erfindung wird die eingangs angeführte Aufgabe gelöst durch ein Brennstoffzellensystem, insbesondere in einem Fahrzeug, umfassend
- wenigstens eine Brennstoffzelle mit einem mit Wasserstoff enthaltendem Anodengas zu speisenden Anodenbereich und einem mit Sauerstoff enthaltendem Kathodengas zu speisenden Kathodenbereich,
- eine erfindungsgemäß aufgebaute Brennstoffzellenabgasanlage, wobei der erste Wärmetauscherbereich zur Aufnahme von am Kathodenbereich der wenigstens einen Brennstoffzelle abgegebenem Brennstoffzellenabgas mit dem Kathodenbereich verbunden ist.

Gemäß einem weiteren Aspekt der vorliegenden Erfindung wird die eingangs angeführte Aufgabe gelöst durch ein Verfahren zum Verringern des Wassergehalts in in einem Brennstoffzellensystem erzeugtem Brennstoffzellenabgas, umfassend die Maßnahmen:
a) Übertragen von Wärme von dem Brennstoffzellenabgas auf ein Kühlgas,
b) Mischen des bei der Maßnahme a) gekühlten Brennstoffzellenabgases mit wenigstens einem Teil des bei der Maßnahme a) erwärmten Kühlgases,
c) Abgeben des bei der Maßnahme b) erzeugten Gemisches zur Umgebung.

Bei diesem Verfahren kann die Maßnahme a) das Zuführen des Brennstoffzellenabgases zu einem ersten Wärmetauscherbereich einer Wärmetauscheranordnung und das Zuführen des Kühlgases zu einem zweiten Wärmetauscherbereich der Wärmetauscheranordnung umfassen, um dadurch eine thermische Wechselwirkung dieser beiden Gasströme zu erzeugen, ohne dass dabei bereits eine Durchmischung derselben auftritt.

Für die Durchmischung der beiden gekühlten bzw. erwärmten Gasströme kann die Maßnahme b) das Zuführen des gekühlten Brennstoffzellenabgases von dem ersten Wärmetauscherbereich zu einer Mischanordnung und das Zuführen des erwärmten Kühlgases von dem zweiten Wärmetauscherbereich zu der Mischanordnung umfassen.

Zum Ausstoßen des im Wesentlichen nicht zur Nebelbildung führenden Brennstoffzellenabgases in die Umgebung kann die Maßnahme c) das Abgeben des in der Mischanordnung erzeugten Gemisches aus gekühltem Brennstoffzellenabgas und erwärmtem Kühlgas umfassen.

Um bei der thermischen Wechselwirkung der beiden Gasströme auskondensierendes Wasser aufnehmen zu können, wird vorgeschlagen, dass die Maßnahme a) eine Maßnahme a1) zum Abscheiden von aus dem Brennstoffzellenabgas auskondensierendem Wasser umfasst.

Dabei kann beispielsweise vorgesehen sein, dass die Maßnahme a1) das Sammeln von aus dem Brennstoffzellenabgas auskondensiertem Wasser in einem Wasser-Aufnahmevolumen und das Abgeben des im Wasser-Aufnahmevolumengesammelten Wassers umfasst.

Für eine effiziente Kühlung des Brennstoffzellenabgases kann beispielsweise gesorgt werden, wenn bei der Maßnahme a) Wärme von dem Brennstoffzellenabgas auf Umgebungsluft als Kühlgas übertragen wird.

Hierzu kann die Umgebungsluft dem zweiten Wärmetauscherbereich vermittels einer Kühlgas-Zuführanordnung zugeführt werden.

Das erfindungsgemäße Verfahren wird vorteilhafterweise vermittels einer erfindungsgemäß aufgebauten Brennstoffzellenabgasanlage in einem diese enthaltenden, erfindungsgemäß aufgebauten Brennstoffzellensystem durchgeführt.

Die vorliegende Erfindung wird nachfolgend mit Bezug auf die beiliegenden Figuren detailliert beschrieben. Es zeigt:
- Fig. 1: in prinzipieller Darstellung ein Brennstoffzellensystem mit einer Brennstoffzellenabgasanlage,
- Fig. 2: ein Zustandsdiagramm, welches den thermodynamischen Zustand des zur Umgebung abgegebenen, wasserentreicherten Brennstoffzellenabgases darstellt.

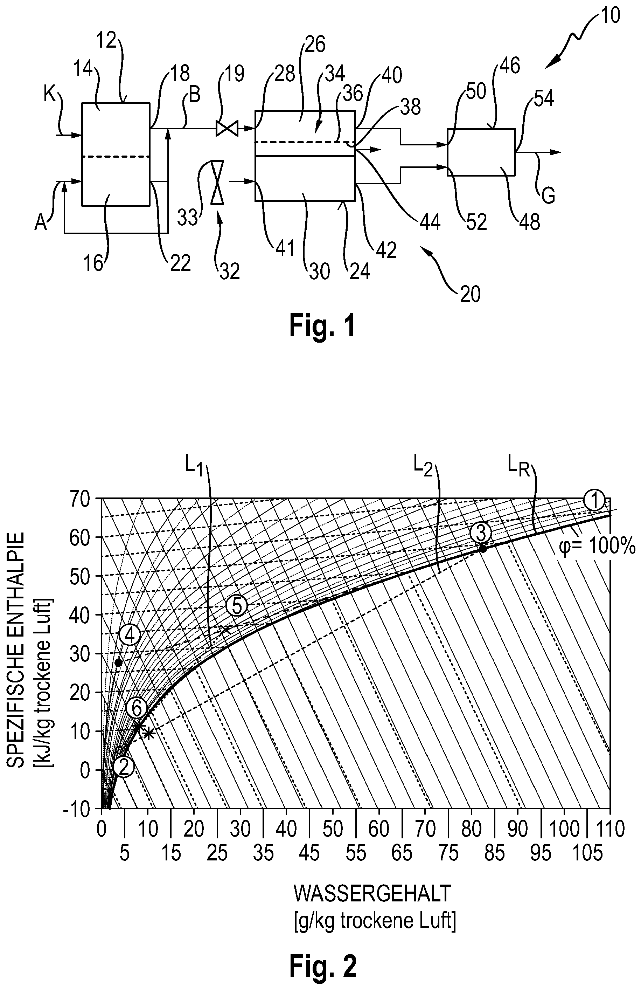

In Fig. 1 ist ein beispielsweise zur Erzeugung elektrischer Energie in einem Fahrzeug vorgesehenes Brennstoffzellensystem allgemein mit 10 bezeichnet. Das Brennstoffzellensystem 10 umfasst eine beispielsweise als Brennstoffzellenstapel oder dergleichen ausgebildete Brennstoffzelle 12 mit einem Kathodenbereich 14 und einem Anodenbereich 16. Dem Kathodenbereich 14 wird durch einen Kompressor oder dergleichen ein Sauersoff enthaltendes Kathodengas K, beispielsweise Luft, zugeführt. Dem Anodenbereich 16 wird ein Wasserstoff (H₂) enthaltendes Anodengas A zugeführt.

Ein im Brennstoffzellenprozess entstehendes Kathodenabgas tritt an einem Kathodenbereich-Austrittsbereich 18 aus dem Kathodenbereich 14 aus und strömt beispielsweise über ein wahlweise absperrbares Ventil 19 in Richtung zu einer allgemein mit 20 bezeichneten Brennstoffzellenabgasanlage. An einem Anodenbereich-Austrittsbereich 22 beispielsweise bei Durchführung eines Purge-Vorgangs austretendes Anodenabgas kann in den Arbeitsprozess rezykliert werden, um den darin enthaltenen Wasserstoff zur Erzeugung elektrischer Energie nutzen zu können, oder/und kann zusammen mit dem Kathodenabgas als Brennstoffzellenabgas B der Brennstoffzellenabgasanlage 20 zugeführt werden.

Im Brennstoffzellenbetrieb entsteht insbesondere im Kathodenbereich 14 Wasser, welches im Allgemeinen als Wasserdampf in dem im Wesentlichen Sauerstoff und Stickstoff enthaltenden Kathodenabgas mitgeführt wird. Der Gehalt des Wassers bzw. Wasserdampfs in dem Kathodenabgas kann vergleichsweise groß sein und nahe einer vollständigen Sättigung, also einer relativen Feuchte von 100%, sein. Wird ein derartiges stark mit Wasser bzw. Wasserdampf angereichertes Kathodenabgas als Brennstoffzellenabgas B zur Umgebung ausgestoßen, besteht die Gefahr, dass insbesondere bei vergleichsweise niedriger Umgebungstemperatur beim Kontakt des Brennstoffzellenabgases B mit der kalten Umgebungsluft Wasser auskondensiert und somit Nebel entsteht.

Um bei der in Fig. 1 dargestellten Brennstoffzellenabgasanlage 20 bzw. dem diese aufweisenden Brennstoffzellensystem 10 die Gefahr einer Nebelbildung bei der Abgabe von Brennstoffzellenabgas B weitestgehend zu eliminieren, umfasst die Brennstoffzellenabgasanlage 20 eine allgemein mit 24 bezeichnete Wärmetauscheranordnung. Einem ersten Wärmetauscherbereich 26 der Wärmetauscheranordnung 24 wird an einem ersten Wärmetauscher-Eintrittsbereich 28 das im Wesentlichen durch das Kathodenabgas bereitgestellte Brennstoffzellenabgas B zugeführt. Einem zweiten Wärmetauscherbereich 30 der Wärmetauscheranordnung 24 wird vermittels einer Kühlgas-Zuführanordnung 32 vorzugsweise Luft als Kühlgas L an einem zweiten Wärmetauscher-Eintrittsbereich 41 zugeführt. Die Kühlgas-Zuführanordnung 32 kann beispielsweise ein Gebläse oder einen Kompressor 33 umfassen und kann die als Kühlgas L zu verwendende Luft aus der Umgebung des Brennstoffzellensystems 10 bzw. aus der Umgebung eines Fahrzeugs aufnehmen und in den zweiten Wärmetauscherbereich 30 fördern.

Das Brennstoffzellenabgas B durchströmt den ersten Wärmetauscherbereich 26, während gleichzeitig das Kühlgas L den zweiten Wärmetauscherbereich 30 durchströmt. Dabei entsteht eine thermische Wechselwirkung dieser beiden im Bereich der Wärmetauscheranordnung 24 grundsätzlich voneinander getrennten Gasströme, durch welchen das eine Temperatur im Bereich von bis zu 100°C aufweisende Brennstoffzellenabgas B durch das im Allgemeinen die Umgebungstemperatur aufweisende und somit deutlich kältere Kühlgas L gekühlt wird, während gleichzeitig das Kühlgas L erwärmt wird.

Bei diesem Prozess der Abkühlung des Brennstoffzellenabgases B im ersten Wärmetauscherbereich 26 erreicht der Sättigungsgrad des Brennstoffzellenabgases B einen Wert von 100%, so dass zumindest ein Teil des im Brennstoffzellenabgas B in Form von Wasserdampf mitgeführten Wassers W auskondensiert. Um dieses Auskondensierende Wasser W abführen zu können, ist dem ersten Wärmetauscherbereich 26 eine allgemein mit 34 bezeichnete Wasser-Abscheideanordnung zugeordnet. Diese kann ein beispielsweise durch eine mit Öffnungen versehende Wand 36 abgetrenntes Wasser-Aufnahmevolumen 38 umfassen, in welchem das beim Abkühlen des Brennstoffzellenabgases B auskondensierende Wasser W sich ansammeln kann.

Das gekühlte und wasserentreicherte Brennstoffzellenabgas B verlässt den ersten Wärmetauscherbereich 26 über einen ersten Wärmetauscher-Austrittsbereich 40. Das durch die thermische Wechselwirkung mit dem Brennstoffzellenabgas B erwärmte Kühlgas L verlässt den zweiten Wärmetauscherbereich 30 über einen zweiten Wärmetauscher-Austrittsbereich 42. Das im Wasser-Aufnahmevolumen 36 angesammelte Wasser W kann beispielsweise kontinuierlich oder zu definierten Zeiten an einem dritten Wärmetauscher-Austrittsbereich 44 aus dem Wasser-Aufnahmevolumen 38 abgeleitet und entweder in flüssiger Form zur Umgebung abgegeben oder beispielsweise in den Brennstoffzellenprozess rückgespeist werden.

Die Brennstoffzellenabgasanlage 20 umfasst ferner eine Mischanordnung 46. Die Mischanordnung 46 umfasst ein in einem Gehäuse gebildetes Mischvolumen 48, in welches das gekühlte und wasserentreicherte Brennstoffzellenabgas B an einem Mischanordnung-Eintrittsbereich 50 eintritt und das erwärmte Kühlgas L an einem zweiten Mischanordnung-Eintrittsbereich 52 eintritt. In dem Mischvolumen 48 durchmischen diese beiden Gasströme sich, so dass an einem Mischanordnung-Austrittsbereich 54 ein Gemisch G aus gekühltem und wasserentreichertem Brennstoffzellenabgas B und erwärmten Kühlgas L aus der Mischanordnung 46 abgegeben und beispielsweise zur Umgebung ausgestoßen werden kann.

Mit Bezug auf die Fig. 2 wird nachfolgend erläutert, wie die thermodynamischen Zustände der verschiedenen Gasströme sich im Verlaufe des Durchströmens der Brennstoffzellenabgasanlage 20 verändern bzw. einstellen.

Dabei sei zunächst angenommen, dass das von der Brennstoffzelle 12 abgegebene Brennstoffzellenabgas B, welches einen relativ hohen Wassergehalt aufweist, den Zustand am Punkt 1 aufweist, in welchem dieses eine vergleichsweise große spezifische Enthalpie, also eine vergleichsweise hohe Temperatur, aufweist und eine relative Feuchte nahe bei 100% hat. Die als Kühlgas L verwendete Umgebungsluft weist eine vergleichsweise geringe spezifische Enthalpie und damit eine vergleichsweise niedrige Temperatur und ebenso einen vergleichsweise niedrigen Wassergehalt auf. Die relative Feuchte der Umgebungsluft ist unter 100%.

Beim Durchströmen der Wärmetauscheranordnung 24 und der dabei auftretenden thermischen Wechselwirkung zwischen dem Brennstoffzellenabgas B und dem Kühlgas L verändert sich der Zustand des Brennstoffzellenabgases B in Richtung zu dem Punkt 3. Da ein Zustand mit einer relativen Feuchte von 100% nicht überschritten werden kann, kondensiert im Zuge der Abkühlung des Brennstoffzellenabgases B Wasser W aus und kann beispielsweise in dem Wasser-Aufnahmevolumen 36 gesammelt werden.

Bei dieser thermischen Wechselwirkung in der Wärmetauscheranordnung 24 erwärmt die als Kühlgas L genutzte Umgebungsluft sich ausgehend vom Punkt 2 auf den Zustand am Punkt 4. Dabei ändert sich der Wassergehalt in der Umgebungsluft nicht. Es nimmt lediglich deren Temperatur und damit die spezifische Enthalpie zu.

Werden nachfolgend in der Mischanordnung 46 diese beiden Gasströme gemischt, so entsteht ein durch den Punkt 5 repräsentierter thermodynamischer Zustand des Gemisches G. Aufgrund des vergleichsweise großen Wassergehalts in dem in die Mischanordnung 46 eintretenden Brennstoffzellenabgases B ist der Wassergehalt des Gemisches G größer, als der Wassergehalt des erwärmten Kühlgases L. Gleichermaßen ist aufgrund der nach wie vor vergleichsweise hohen Temperatur des aus dem ersten Wärmetauscherbereich 26 abgegebenen Brennstoffzellenabgases B die Temperatur des Gemisches G am Punkt 5 höher als die Temperatur des Kühlgases L am Punkt 4, also beim Verlassen des zweiten Wärmetauscherbereichs 30.

Wird nachfolgend das Gemisch G zur Umgebung abgegeben, wird dieses aufgrund des thermischen Kontakts mit der Umgebungsluft einen Zustand einnehmen, in welchem sowohl die Temperatur als auch der Wassergehalt des Gemisches G sich den entsprechenden Werten der Umgebungsluft anpassen wird, so dass das Gemisch G in den durch den Punkt 2 repräsentierten Zustand gelangt.

Deutlich zu erkennen ist in Fig. 2, dass beim Übergang von dem Zustand am Punkt 5 zu dem Zustand am Punkt 2 im Wesentlichen entlang einer Linie L₁ das fiktive Unterschreiten der die relative Luftfeuchte von 100% repräsentierenden Linie L_{R} deutlich geringer ausgeprägt ist, als in einem Zustand, in welchem das im ersten Wärmetauscherbereich 26 gekühlte und von Wasser W bereits entreicherte Brennstoffzellenabgas B ausgehend vom Zustand des Punkts 3 sich entlang einer fiktiven Linie L₂ dem Zustand des Punkt 2 angenähert hätte. Dies bedeutet, dass beim Austreten des Gemisches G zur Umgebung hin nahezu kein Wasser aus dem Gemisch G auskondensieren wird. Dies ist darauf zurückzuführen, dass beim Übergang von dem Zustand des Punkts 1 zu dem Zustand des Punkts 3 bereits eine deutliche Menge des im Brennstoffzellenabgas B zunächst mitgeführten Wassers bzw. Wasserdampfs auskondensiert wurde und dass nachfolgend durch die Durchmischung des gekühlten und wasserentreicherten Brennstoffzellenabgases B mit dem erwärmten Kühlgas L die relative Feuchte des so erzeugten Gemisches abgesenkt wurde.

Mit den in der Brennstoffzellenabgasanlage 20 durchgeführten Prozess zur Abkühlung des Brennstoffzellenabgases B und der dabei auftretenden Abgabe von Wasser aus diesem sowie der nachfolgenden Durchmischung des gekühlten und wasserentreicherten Brennstoffzellenabgases B mit dem zuvor zum Kühlen des Brennstoffzellengases B genutzten und dabei erwärmten Kühlgas L wird es mit einfachen baulichen Maßnahmen möglich, das Auskondensieren von Wasser und eine damit einhergehende Nebelbildung beim Ausstoßen von Brennstoffzellenabgas zur Umgebung weitestgehend zu vermeiden.

Es ist darauf hinzuweisen, dass die Brennstoffzellenabgasanlage auch in anderer Weise ausgebildet sein kann, als in Fig. 1 dargestellt. Beispielsweise können die Wärmetauscheranordnung 24 und die Mischanordnung 46 baulich zusammengefasst und in einem Gehäuse untergebracht sein, in welchem für den ersten Wärmetauscherbereich 26 und den zweiten Wärmetauscherbereich 30 voneinander getrennte Volumina zur Verfügung gestellt sind, die über jeweilige Öffnungen, Kanäle oder dergleichen zu dem Mischvolumen 48 offen sind. Die Wasser-Abscheideanordnung 34 kann auch stromabwärts der Wärmetauscheranordnung 24 beispielsweise integriert in die Mischanordnung 46, jedoch stromaufwärts des Mischvolumen 48 vorgesehen sein. Auch kann die Brennstoffzellenabgasanlage weitere Systembereiche, wie z. B. einen Schalldämpfer oder dergleichen, beispielsweise stromabwärts der Mischanordnung 46 umfassen, so dass das Gemisch G von der Mischanordnung 46 nicht direkt, sondern über derartige weitere Systembereiche zur Umgebung abgegeben wird.

## Patentansprüche

1. Brennstoffzellenabgasanlage für ein Brennstoffzellensystem, insbesondere in einem Fahrzeug, umfassend:
- eine Wärmetauscheranordnung (24) mit einem von Brennstoffzellenabgas (B) durchströmbaren ersten Wärmetauscherbereich (26) und einem von Kühlgas (L) durchströmbaren zweiten Wärmetauscherbereich (30), wobei der erste Wärmetauscherbereich (24) und der zweite Wärmetauscherbereich (30) zur Übertragung von Wärme von dem Brennstoffzellenabgas (B) auf das Kühlgas (L) in Wärmeübertragungswechselwirkung stehen,
- eine Mischanordnung (46) zur Aufnahme von aus dem ersten Wärmetauscherbereich (36) abgegebenem, gekühltem Brennstoffzellenabgas (B) und aus dem zweiten Wärmetauscherbereich (30) abgegebenem, erwärmtem Kühlgas (L) in einem Mischvolumen (48) zur Erzeugung eines Gemisches (G) aus gekühltem Brennstoffzellenabgas (B) und erwärmtem Kühlgas (L) und zur Abgabe des Gemisches (G).

2. Brennstoffzellenabgasanlage nach Anspruch 1,
**dadurch gekennzeichnet,**
- **dass** der erste Wärmetauscherbereich (26) einen ersten Wärmetauscher-Eintrittsbereich (28) zur Aufnahme von Brennstoffzellenabgas (B) und einen ersten Wärmetauscher-Austrittsbereich (40) zur Abgabe von gekühltem Brennstoffzellenabgas (B) umfasst,
- **dass** der zweite Wärmetauscherbereich (30) einen zweiten Wärmetauscher-Eintrittsbereich (41) zur Aufnahme von Kühlgas (L) und einen zweiten Wärmetauscher-Austrittsbereich (42) zur Abgabe von erwärmtem Kühlgas (L) umfasst,
- **dass** die Mischanordnung (46) einen ersten Mischanordnung-Eintrittsbereich (50) zur Aufnahme von am ersten Wärmetauscher-Austrittsbereich (40) abgegebenem, gekühltem Brennstoffzellenabgas (B) und einen zweiten Mischanordnung-Eintrittsbereich (52) zur Aufnahme von am zweiten Wärmetauscher-Austrittsbereich (42) abgegebenem, erwärmtem Kühlgas (L) umfasst.

3. Brennstoffzellenabgasanlage nach Anspruch 1 oder 2,
**dadurch gekennzeichnet, dass** eine Kühlgas-Zuführanordnung (32) zum Zuführen von Kühlgas (L) zu dem zweiten Wärmetauscherbereich (30) vorgesehen ist,
vorzugsweise wobei die Kühlgas-Zuführanordnung (32) ein Gebläse oder einen Kompressor (33) umfasst.

4. Brennstoffzellenabgasanlage nach Anspruch 3,
**dadurch gekennzeichnet, dass** die Kühlgas-Zuführanordnung (32) zum Zuführen von Umgebungsluft als Kühlgas (L) zu dem zweiten Wärmetauscherbereich (30) ausgebildet ist.

5. Brennstoffzellenabgasanlage nach einem der Ansprüche 1-4,
**dadurch gekennzeichnet, dass** eine Wasser-Abscheideanordnung (34) zum Abscheiden von aus dem Brennstoffzellenabgas (B) auskondensiertem Wasser (W) vorgesehen ist,
vorzugsweise wobei die Wasser-Abscheideanordnung (34) im Strömungsweg des Brennstoffzellenabgases (B) stromaufwärts des Mischvolumens (48) vorgesehen ist.

6. Brennstoffzellenabgasanlage nach Anspruch 5,
**dadurch gekennzeichnet, dass** die Wasser-Abscheideanordnung (34) im Bereich des ersten Wärmetauscherbereichs (26) vorgesehen ist, vorzugsweise wobei die Wasser-Abscheideanordnung (34) in Zuordnung zu dem ersten Wärmetauscherbereich (26) ein Wasser-Aufnahmevolumen (38) und einen dritten Wärmetauscher-Austrittsbereich (44) zur Abgabe von Wasser (W) aus dem Wasser-Aufnahmevolumen (38) umfasst.

7. Brennstoffzellensystem, insbesondere in einem Fahrzeug, umfassend
- wenigstens eine Brennstoffzelle (12) mit einem mit Wasserstoff enthaltendem Anodengas (A) zu speisenden Anodenbereich (16) und einem mit Sauerstoff enthaltendem Kathodengas (L) zu speisenden Kathodenbereich (14),
- eine Brennstoffzellenabgasanlage (20) nach einem der Ansprüche 1-6, wobei der erste Wärmetauscherbereich (36) zur Aufnahme von am Kathodenbereich (14) der wenigstens einen Brennstoffzelle (12) abgegebenem Brennstoffzellenabgas (B) mit dem Kathodenbereich (14) verbunden ist.

8. Verfahren zum Verringern des Wassergehalts in in einem Brennstoffzellensystem erzeugtem Brennstoffzellenabgas (B), umfassend die Maßnahmen:
a) Übertragen von Wärme von dem Brennstoffzellenabgas (B) auf ein Kühlgas (L),
b) Mischen des bei der Maßnahme a) gekühlten Brennstoffzellenabgases (B) mit wenigstens einem Teil des bei der Maßnahme a) erwärmten Kühlgases (L),
c) Abgeben des bei der Maßnahme b) erzeugten Gemisches (G) zur Umgebung.

9. Verfahren nach Anspruch 8,
**dadurch gekennzeichnet, dass** die Maßnahme a) das Zuführen des Brennstoffzellenabgases (B) zu einem ersten Wärmetauscherbereich (26) einer Wärmetauscheranordnung (24) und das Zuführen des Kühlgases (L) zu einem zweiten Wärmetauscherbereich (30) der Wärmetauscheranordnung (24) umfasst.

10. Verfahren nach Anspruch 9,
**dadurch gekennzeichnet, dass** die Maßnahme b) das Zuführen des gekühlten Brennstoffzellenabgases (B) von dem ersten Wärmetauscherbereich (26) zu einer Mischanordnung (46) und das Zuführen des erwärmten Kühlgases (L) von dem zweiten Wärmetauscherbereich (30) zu der Mischanordnung (46) umfasst.

11. Verfahren nach Anspruch 10,
**dadurch gekennzeichnet, dass** die Maßnahme c) das Abgeben des in der Mischanordnung (46) erzeugten Gemisches (G) aus gekühltem Brennstoffzellenabgas (B) und erwärmtem Kühlgas (L) umfasst.

12. Verfahren nach einem der Ansprüche 8-11,
**dadurch gekennzeichnet, dass** die Maßnahme a) eine Maßnahme a1) zum Abscheiden von aus dem Brennstoffzellenabgas (B) auskondensierendem Wasser (W) umfasst,
vorzugsweise wobei die Maßnahme a1) das Sammeln von aus dem Brennstoffzellenabgas (B) auskondensiertem Wasser (W) in einem Wasser-Aufnahmevolumen (38) und das Abgeben des im Wasser-Aufnahmevolumen (38) gesammelten Wassers (W) umfasst.

13. Verfahren nach einem der Ansprüche 8-12,
**dadurch gekennzeichnet, dass** bei der Maßnahme a) Wärme von dem Brennstoffzellenabgas (B) auf Umgebungsluft als Kühlgas (L) übertragen wird.

14. Verfahren nach Anspruch 13, sofern auf Anspruch 9 rückbezogenen,
**dadurch gekennzeichnet, dass** die Umgebungsluft dem zweiten Wärmetauscherbereich (30) vermittels einer Kühlgas-Zuführanordnung (32) zugeführt wird.

15. Verfahren nach einem der Ansprüche 8-14,
**dadurch gekennzeichnet, dass** das Verfahren vermittels einer Brennstoffzellenabgasanlage (20) nach einem der Ansprüche 1-6 in einem Brennstoffzellensystem (10) nach Anspruch 7 durchgeführt wird
